Europäisches Patentamt

European Patent Office

Office européen des brevets

(19)

(11) **EP 0 485 867 B1**

(12) **EUROPÄISCHE PATENTSCHRIFT**

(45) Veröffentlichungstag und Bekanntmachung des Hinweises auf die Patenterteilung:
**28.02.1996 Patentblatt 1996/09**

(51) Int Cl.[6]: **C09K 21/02**, C09K 21/00, E04B 1/94, E04B 1/80

(21) Anmeldenummer: **91118858.9**

(22) Anmeldetag: **05.11.1991**

(54) **Brandschutzmittel aus Metallhydroxid und Magnesiabinder, sowie dessen Verwendung**

Fire-proofing composition comprising metallic hydroxyde and magnesia-binders and its use

Composition retardratice de feu à base d'hydroxyde métallique et de liant magnésien et utilisation

(84) Benannte Vertragsstaaten:
**AT BE CH DE DK ES FR GB IT LI LU NL SE**

(30) Priorität: **13.11.1990 DE 4036088**

(43) Veröffentlichungstag der Anmeldung:
**20.05.1992 Patentblatt 1992/21**

(73) Patentinhaber: **Grünzweig + Hartmann AG**
**D-67059 Ludwigshafen (DE)**

(72) Erfinder: **Kummermehr, Hans**
**W-6700 Ludwigshafen (DE)**

(74) Vertreter: **KUHNEN, WACKER & PARTNER**
**D-85354 Freising (DE)**

(56) Entgegenhaltungen:
**EP-A- 0 217 569**      **WO-A-83/04041**
**DE-A- 3 510 935**     **DE-A- 3 824 598**
**US-A- 4 632 835**     **US-A- 4 842 772**

**Beschreibung**

Die Erfindung betrifft ein Brandschutzmittel gemäß Anspruch 1, die Verwendung eines solchen Brandschutzmittels gemäß dem Oberbegriff des Anspruchs 5 sowie des Anspruchs 6 und des Anspruchs 13, Brandschutzelemente gemäß den Oberbegriffen der Ansprüche 7 bzw. 14 sowie ein Verfahren zur Herstellung von Brandschutzelementen gemäß dem Oberbegriff des Anspruchs 16.

Zur Erzielung eines hohen Feuerwiderstandes von Brandschutzelementen ist man bestrebt, Wärmedämmlagen mit Feuerschutzzonen aus Brandschutzmitteln zu kombinieren, deren Wärmeaufnahmekapazität dadurch wesentlich erhöht ist, daß beim Temperaturanstieg im Brandfalle endotherme chemische Reaktionen oder Phasenumwandlungen ablaufen. Bekanntlich bestimmt sich die Feuerwiderstandsfähigkeit nach der Dauer, bei der bei einem bestimmten Temperaturanstieg auf einer Seite des Brandschutzelementes, beispielsweise einer Feuerschutztüre die andere Seite des Brandschutzelementes unter einer definierten Grenztemperatur, z. B. 180°C, bleibt. Die Standzeit des Brandschutzelementes bis zum Erreichen der Grenztemperatur auf der kalten Seite in Minuten ergibt die Feuerwiderstandsklasse, wobei nach DIN 4102, Teil 5 z.B. die Einstufung in die Feuerwiderstandsklasse F30 eine 30-minütige Standzeit bedeutet, F90 eine 90-minütige Standzeit usw. Es ist offensichtlich, daß im Brandfalle durch Wärmedämmaßnahmen - etwa durch Einsetzen von Mineralwolleplatten in eine Metallumhüllung - allein nur eine begrenzte Verzögerung des Temperaturanstieges auf der kalten Seite erzielt werden kann, und hierzu außerdem beachtliche Wandstärken erforderlich sind. Darüber hinaus stehen Wärmedämmstoffe mit entsprechend hohem Wärmedurchlaßwiderstand einerseits und unter Brandbedingungen ausreichender Temperaturbeständigkeit andererseits - mit Ausnahme von Asbest - nicht zur Verfügung, wobei Asbest unter modernen toxikologischen Gesichtspunkten nicht mehr verwendet werden darf. Mineralwolle, selbst Steinwolle, sintert unter den hohen Temperaturen, die während eines Brandes auftreten von der heißen Seite ausgehend zusammen und büßt somit bei geringer Wandstärke auf der heißen Seite recht schnell ihre Wirksamkeit als Wärmedämmaterial ein, so daß relativ große Wandstärken aus Dämmaterial erforderlich sind. Des weiteren weist Mineralwolle eine relativ geringe Wärmekapazität auf und kann daher den Temperaturanstieg auf der kalten Seite durch eigene Wärmeaufnahme bei geringen Wandstärken nur unwesentlich verzögern.

Als Material für eine Schicht, die durch Speicherung latenter Wärme infolge Phasenumwandlung den Temperaturanstieg an der kalten Seite verzögern kann, ist insbesondere Gips im praktischen Einsatz. Jedoch kann Gips als eine Lage mit den in der Praxis benötigten Abmessungen nur in Form von Gipskartonplatten gehandhabt werden, wobei die Gipslage beidseits mit Karton kaschiert ist. Diese Kartonkaschierung erhöht naturgemäß die Brandlast und fördert zusätzlich die Bildung brennbarer Schwel- und Zersetzungsgase.

Zur Vermeidung solcher organischer Brandlasten schlägt die DE-OS 35 10 935 zur Fertigung eines Brandschutzelementes als Einlage für eine Feuerschutztür vor, zwischen zwei Platten aus Mineralwolle ein mit Magnesiumoxichlorid bzw. Magnesiumoxisulfat gebundenes Granulat aus Dolomit und Kalkstein einzubringen. Dies führt jedoch zu für den praktischen Einsatz häufig unvertretbaren Gewichten solcher Brandschutzelemente.

Zur Lösung dieses Gewichtsproblems schlägt die DE-OS 36 24 736 vor, das Granulat durch Mineralwolleflocken zu ersetzen, welche mittels eines Magnesiabinders hydraulisch gebunden sind. Dies bringt jedoch das Problem mit sich, daß die Flocken aus Mineralwolle, selbst aus Steinwolle, unter den Temperaturbedingungen eines Brandes zusammensintern und somit dennoch zu einem zu vermeidenden Wärmedurchlaß von der Brandseite zur kalten Seite hin führen können. Dies wird ferner auch durch eine heterogene Verteilung der gebunden Mineralwolleflocken begünstigt, woraus folgt, daß nach der Lehre der DE-OS 36 24 736 relativ große Wandstärken zur Erzielung einer wirksamen Feuerhemmung nötig sind.

Daher war es bereits ein wesentlicher Fortschritt, gemäß der DE-OS 38 24 598, ein Brandschutzmittel aus einem wasserabspaltenden Hydroxid und einem Wasserglas oder Kieselsol als verbindende Schicht zwischen zwei Körpern aus gebundener Mineralwolle als Feuerschutzschicht zu verwenden.

Somit werden nach der Lehre der DE-OS 38 24 598 zum einen ausschließlich anorganische Stoffe eingesetzt, so daß sichergestellt ist, daß organische Stoffe, welche im Brandfalle brennbare und/oder giftige Gase erzeugen könnten, fehlen. Zum anderen geht das dort bevorzugt verwendete Aluminiumhydroxid (Hydrargillit) bei Erwärmung zunächst in Aluminiumoxidhydroxid (Böhmit) über, welches bei noch höherer Temperatur in die Gamma-Form des Aluminiumoxids übergeht und hierbei gleichzeitig Wasser verliert. Damit steht mit der Umwandlung des Aluminiumhydroxids eine chemische Reaktion mit stark endothermen Charakter zu Verfügung, die sich bei brandschutztechnischen Belangen bislang gut bewährt hat.

Zur Herstellung von Brandschutzelementen wird gemäß der DE-OS 38 24 598 ein geeignetes wasserabspaltendes Hydroxid mit einem Kieselsol zu einer plastischen Brandschutzmittel-Masse verarbeitet, die auf eine Seite eines Mineralwollekörpers aufgetragen wird. Auf die noch feuchte Schicht wird dann ein zweiter Mineralwollekörper aufgelegt und durch leichtes Andrücken mit der Brandschutzmittel-Schicht aus der plastischen Masse verbunden.

Das Verfestigen des Kieselsols - also der Übergang desselben in den vernetzten Gelzustand des $SiO_2$ - erfolgt innerhalb eines Zeitraumes von ca. 2 bis 8h.

Kieselsol dient somit als anorganisches Bindemittel. Seine Bindemittelwirkung entfaltet es dadurch, daß es in einen vernetzten Gelzustand eines $SiO_2$-Gerüstes übergeht, wobei es, ebenso wie beim Altern, Wasser an seine Umgebung - hier die Körper aus gebundener Mineralwolle - abgibt. Dies geschieht etwa nach folgenden Reaktionsgleichungen:

$$Si(OH)_4 \longrightarrow SiO(OH)_2 + H_2O$$

$$SiO(OH)_2 \longrightarrow SiO_2 + H_2O$$

Das hierbei entstehende Wasser muß demnach aus der Reaktionszone abgeführt werden. Dies führt, im Falle einer Verwendung von Brandschutzelementen aus Mineralwollekörpern, zwangsläufig zu einer Verteilung des Reaktionswassers - neben dem für die Bereitung der plastischen Masse benötigten Suspensionswasser - innerhalb der Mineralwolle, wodurch sich eine beachtliche Durchfeuchtung derselben ergibt. Hierbei wirkt sich ferner die an sich vorteilhafte Eigenschaft des Kieselsol-Bindemittels, geschlossene Oberflächen zu bilden, insofern nachteilig aus, als die Bildung von geschlossenen Oberflächen einer schnellen Abführung des Reaktions- und Suspensionswassers entgegenwirkt.

Zur Beseitigung der durch das Reaktionswasser bewirkten Durchfeuchtung, insbesondere von Mineralwolleteilen, muß das frisch hergestellte Brandschutzelement einer energie- und zeitintensiven Trocknungs- und Aushärteprozedur unterworfen werden. Da jedoch aus ökonomischen Gründen keine vollständige Trocknung der Brandschutzelemente durchgeführt werden kann, wird nach dieser Aktivtrocknung zu einer passiven Lagertrocknung übergegangen. Diese geschieht gewöhnlich dadurch, daß auf einer zur Lagerung und Transport der hergestellten Brandschutzprodukte bestimmten Palette die einzelnen Brandschutzelemente, beispielsweise Einlagen für Feuerschutztüren, mit Abstandshaltern - in der Regel Streifen aus Mineralwolleplatten - übereinander mit einem solchen Abstand zwischen den einzelnen Brandschutzelementen gestapelt werden, daß eine gute Luftzirkulation zwischen den Produkten herrscht, so daß aus der Reaktionszone nach diffundierendes Wasser verdunsten kann und von zirkulierender Luft in die Umgebung abgeführt werden kann.

Eine solche Vorgehensweise führt einerseits dazu, daß bei einem Abstand von mehreren Zentimetern, ein beachtliches Volumen an teurem Lager- sowie Transportraum verloren geht. So können beispielsweise lediglich ca. 15 nach der Lehre der DE-OS 38 24 598 hergestellte Einlagen für Feuerschutztüren übereinander gestapelt werden. Andererseits führt die Verwendung von Abstandshaltern zum einen zu zusätzlichen Kosten auf der Herstellerseite und zum anderen zu Entsorgungsproblemen und damit ebenfalls zu Kosten auf der Abnehmerseite.

Ausgehend vom Stand der Technik der DE-OS 38 24 598 ist es daher Aufgabe der vorliegenden Erfindung, ein Brandschutzmittel zur Verfügung zu stellen, welches es erlaubt, Brandschutzelemente, insbesondere solche auf Mineralwollebasis, einfacher und billiger herzustellen.

Die Lösung dieser Aufgabe erfolgt hinsichtlich des Mittels durch die Merkmale des Anspruchs 1, verwendungsmäßig durch die kennzeichnenden Merkmale der Ansprüche 5, 6 und 13, in Bezug auf die Produkte durch die kennzeichnenden Merkmale der Ansprüche 7 und 14 sowie in verfahrenstechnischer Hinsicht durch die kennzeichnenden Merkmale des Anspruchs 16.

Durch das erfindungsgemäße Brandschutzmittel in Form einer Mischung aus einem wasserabspaltenden Hydroxid - also einer sich im Brandfalle unter Wärmeverbrauch umwandelnden Substanz - und einem exotherm abbindenden Magnesiabinder steht ein Brandschutzmittel zur Verfügung, welches in der Lage ist, beim Abbinden Wasser aus einer bevorzugt verwendeten wäßrigen Aufschlämmung des Brandschutzmittels aufzunehmen. Darüber hinaus handelt es sich bei dem Abbindevorgang des erfindungsgemäßen Brandschutzmittels um eine exotherme chemische Reaktion, welche Wärme an die Umgebung abgibt und somit dazu beiträgt, überschüssiges Wasser, welches während der Abbindereaktion nicht chemisch verbraucht wird, zum Verdunsten zu bringen und hierdurch aus der Reaktionszone des Brandschutzmittels zu entfernen. Auch bildet ein solches Brandschutzmittel im wesentlichen offenporige Oberflächen aus, so daß die Wasserdiffusion nur mäßig behindert wird.

Zum Starten dieser exothermen Abbindereaktion ist lediglich eine kurzzeitige "Anschuberwärmung" erforderlich.

Darüber hinaus ist das erfindungsgemäßen Brandschutzmittel erheblich billiger als beispielsweise das Kieselsol-haltige Brandschutzmittel der DE-OS 38 24 598.

Brandschutzmittel nach der vorliegenden Erfindung können gemäß Patentanspruch 5 vorteilhaft zur Füllung von Hohlprofilen, insbesondere Metallprofilen, eingesetzt werden. Solche mit dem erfindungsgemäßen Brandschutzmittel gefüllten Hohlprofile können beispielsweise als Rahmen für Feuerschutztüren oder als Wände, beispielsweise Schubladenwände, in feuersicheren Schränken oder Kassetten oder dgl., eingesetzt werden.

Gemäß Anspruch 6 kann das Brandschutzmittel auch zur Verbindung, insbesondere zur brandschutztechnischen Verbindung, von wenigstens zwei Körpern aus gebundener Mineralwolle eingesetzt werden. In diesem Fall werden Fasern der Körper aus Mineralwolle, beispielsweise Mineralwolleplatten, beim Abbinden des Brandschutzmittels in die abgebundene Brandschutzmittel-Masse mit eingebacken. Hierdurch wird eine Schicht aus abgebundenem Brandschutzmittel auf dem Körper aus Mineralwolle fixiert. Ein besonderer Vorteil liegt dabei in der Kompatibilität von Mineralwollefasern und erfindungsgemäßem Brandschutzmittel.

Durch solch eine Verwendung eröffnet sich gemäß Anspruch 16 ein Verfahren zur Herstellung von Brandschutzelementen auf Mineralwollebasis. Hierbei liegt der wesentliche Vorteil des Herstellungsverfahrens darin begründet, daß es hiermit möglich ist, Brandschutzelemente im Industriemaßstab herzustellen, die nur noch einer kurzzeitigen Anschubtrocknung bedürfen und nach dem Starten der exothermen Abbindereaktion und dem gleichzeitigen Wasserverbrauch während des Abbindens des Magnesiabinders sofort ohne Verwendung von Abstandshaltern zwischen einzelnen Brandschutzelementen gestapelt werden können. Als Wärmequelle kann neben einer Durchführung der gefertigten Brandschutzelemente durch einen Tunnelofen eine Beheizung mittels Mikrowellenbestrahlung vorgenommen werden.

Somit gestaltet sich das erfindungsgemäße Herstellungsverfahren als erheblich energiesparender, billiger und einfacher durchzuführen als dies bislang möglich war. Dies liegt zum einen daran, daß das erfindungsgemäße Brandschutzmittel kostengünstiger herzustellen ist als die bislang im Stand der Technik verwendeten Brandschutzmittel, z. B. solche, die Kieselsol enthalten. Zum anderen sinken die Energiekosten durch die kurzen Beheizungszeiten der Produkte für das Herstellungsverfahren der Brandschutzelemente beachtlich.

Darüberhinaus führt das erfindungsgemäße Verfahren noch zu Produkten gemäß Anspruch 7, welche aufgrund des schnellen Trocknens der Produkte schnell ihrem Bestimmungszweck zugeführt werden können und außerdem enorm raumsparend gelagert bzw. transportiert werden können. So ist es beispielsweise möglich, im Falle der Herstellung von Einlagen für Feuerschutztüren als Brandschutzelementen, bis zu 30 solcher Einlagen auf einer Palette ohne Abstandshalter zwischen den einzelnen Brandschutzelementen zu stapeln. Dies bedeutet gegenüber dem Stand der Technik eine doppelte Raumausnutzung. Außerdem entfallen somit Kosten für die Bereitstellung bzw. Entsorgung der im Stand der Technik benötigten Abstandshalter.

Vorzugsweise gelangt in der vorliegenden Erfindung Aluminiumhydroxid als wasserabspaltendes Hydroxid zum Einsatz, jedoch können auch andere geeignete Hydroxide wie beispielsweise Magnesiumhydroxid, Kalziumhydroxid, Eisenhydroxid, Eisenoxidhydroxid oder dgl. eingesetzt werden, wobei diese Hydroxide im Brandfalle alle endotherm unter Wasserabspaltung in ihre entsprechenden Oxide $Al_2O_3$, $MgO$, $CaO$, $Fe_2O_3$ usw. überführt werden.

In der vorliegenden Erfindung wird gemäß Anspruch 3 bzw. 10 vorzugsweise eine Mischung verwendet, wobei die Mischung eine Zusammensetzung von 50 - 95 Gew.-%, insbesondere 60 - 90 Gew.-%, vorzugsweise 70 - 90 Gew.-% wasserabspaltendes Hydroxid, insbesondere Aluminiumhydroxid, und 5 - 50 Gew.-%, insbesondere 10 - 40 Gew.-%, vorzugsweise 10 - 30 Gew.-% exotherm abbindenden Magnesiabinder, davon vorzugsweise 2,5 - 25 Gew.-%, insbesondere 5 - 20 Gew.-%, vorzugsweise 5 - 15 Gew.-% Magnesiumoxid sowie 2,5 - 25 Gew.-%, insbesondere 5 - 20 Gew.-%, vorzugsweise 5 - 15 Gew.-% Magnesiumsulfat und/oder Magnesiumchlorid aufweist.

Die weiteren Unteransprüche stellen vorteilhafte Weiterbildungen der Erfindung dar.

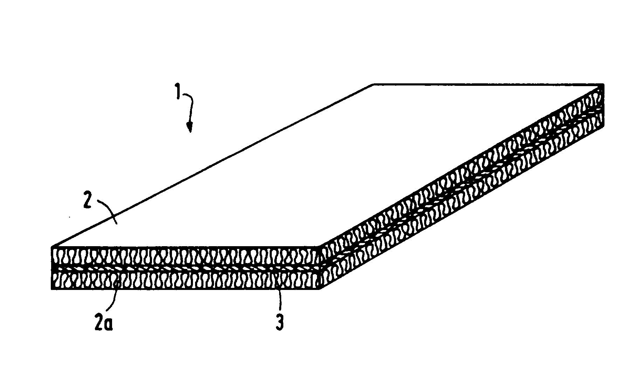

Weitere Einzelheiten, Merkmale und Vorteile der vorliegenden Erfindung ergeben sich aus der nachfolgenden Beschreibung eines Ausführungsbeispiels und anhand der Zeichnung.

Es zeigt die Figur eine Ansicht eines erfindungsgemäßen Brandschutzelementes in perspektivischer Darstellung.

Das Brandschutzelement 1, welches im Beispielsfalle als Einlage für eine Feuerschutztüre dienen möge, besteht aus zwei plattenförmigen Körpern 2 und 2a aus gebundener Mineralwolle, die durch eine Schicht 3 aus Brandschutzmittel, hergestellt aus einem Gemisch aus 80 Gew.-% Aluminiumhydroxid, als wasserabspaltendem Hydroxid, mit einer Mischung aus 10 Gew.-% Magnesiumoxid, beispielsweise kaustischer Magnesia, und 10 Gew.-% Magnesiumsulfat als Magnesiabinder, verbunden sind.

Die verbindende Schicht 3 aus Brandschutzmittel dient gleichzeitig als Feuerschutzschicht, da sie sich im Brandfalle bei ihrer Erwärmung im wesentlichen zu Aluminiumoxid umwandelt, in welches noch Magnesiumoxid des Magnesiabinders eingelagert ist. Bei dieser endotherm verlaufenden Umwandlung wird nicht nur brandtechnisch günstiger Wasserdampf freigesetzt, sondern es werden auch große Energiemengen verbraucht. Ferner bildet die verbindende Schicht 3 nach ihrer Erhitzung einen Überzug für einen plattenförmigen Körper aus Mineralwolle, der dem Feuer abgewandt ist. Während der dem Feuer zugewandte plattenförmige Körper aus Mineralwolle unter der Hitzeeinwirkung relativ rasch zusammensintert, verzögert die verbindende Schicht 3 das Zusammensintern der dem Feuer abgewandten Körper 2, bzw. 2a aus Mineralwolle, wodurch ein schneller Temperaturanstieg an der kalten Seite vermieden werden kann.

Ein solches Brandschutzelement 1 wird zur Herstellung einer feuerhemmenden Tür in Form einer Verbundplatte gefertigt und zwischen den Stahlblechen einer Feuerschutztür eingefügt.

Andererseits ist es auch möglich, die verbindende Schicht 3 aus dem Gemisch aus dem wasserabspaltenden Aluminiumhydroxid und einem Magnesiabinder, bevorzugt in Form einer 1:1 Mischung aus kaustischer Magnesia und Magnesiumsulfat auf einen Körper 2, 2a aus Mineralwolle als Dämmlage aufzubringen und die beschichtete Dämmlage in eine Stahlblechschale der Feuerschutztüre einzulegen, den zweiten Körper 2 bzw. 2a aus Mineralwolle auf die verbindende Schicht 3 aufzubringen und gleichzeitig in die Stahlblechschale der Feuerschutztüre einzupassen, wonach die Tür samt Einlage kurz erwärmt wird, so daß die exotherme Abbindereaktion des Magnesiabinders in Gang kommt. Dies führt weiterhin dazu, daß nur wenig Restwasser in den Fasern der Mineralwolle zurückbleibt, so daß sich keinerlei Korrosionsprobleme, etwa für Metallmantelteile einer Feuerschutztüre ergeben.

Feuerschutztüren, die mittels des erfindungsgemäßen Brandschutzmittels hergestellt werden, genügen ohne weiteres der F90-Norm.

Nach einem besonders bevorzugten Verfahren setzt man dem Aluminiumhydroxid in fester Form oder in plastischer wäßriger Aufschlämmung eine ebenfalls plastische Aufschlämmung von Magnesiabinder auf Basis von Magnesiumoxid und Magnesiumsulfat zu, vermischt die Bestandteile, beispielsweise in einer Förderschnekke, und bringt das erhaltene homogene Gemisch auf den zu beschichtenden Körper aus Mineralwolle in einer Schichtdicke von ca. 3 mm auf. Hierbei ist es ein besonderer Vorteil - neben den niedrigen Kosten - des Magnesiabinders, daß dieser sowohl mit dem Aluminiumhydroxid als auch mit den Fasern der Mineralwolle ausgezeichnet verträglich ist.

Anschließend wird der zweite Körper aus Mineralwolle auf die noch feuchte Schicht gebracht und angedrückt. Zur Induktion der Abbindung des Brandschutzmittels wird das derart vorgefertigte Brandschutzelement ca. 2-4 min auf etwa 200°C erwärmt.

Eine besondere Eigenschaft des Brandschutzmittels der vorliegenden Erfindung liegt darin, daß das Brandschutzmittel aus Aluminiumhydroxid und Magnesiabinder unmittelbar in Hohlprofile aus Metall eingefüllt werden kann und somit beispielsweise feuerhemmende Türrahmen bzw. Schrank- oder Kassettenwände hergestellt werden können. Durch die wasserverbrauchende Abbindereaktion des Brandschutzmittels und die frei werdende Wärme können solche gefüllten Hohlprofile auch schnell trocknen, so daß kaum Korrosion zu befürchten ist.

Insgesamt steht mit dem erfindungsgemäßen Brandschutzmittel ein Mittel zur Verfügung, welches recht kostengünstig herzustellen ist und welches aufgrund seines exothermen Abbindeverhaltens noch zusätzlich die Kosten zur Herstellung von Brandschutzelementen, die das erfindungsgemäße Brandschutzmittel enthalten, senken.

Darüber hinaus kann das erfindungsgemäße Brandschutzmittel sowohl als Feuerschutzschicht für Brandschutzelemente auf Mineralwollebasis als auch zur direkten Füllung für Brandschutzelemente, die als Metallhohlprofile ausgebildet sind, verwendet werden.

**Patentansprüche**

1. Brandschutzmittel aus einer Mischung aus einem wasserabspaltenden Hydroxid und einem exotherm abbindenden Magnesiabinder.

2. Brandschutzmittel nach Anspruch 1, dadurch gekennzeichnet, daß das wasserabspaltende Hydroxid Aluminiumhydroxid ist, und der Magnesiabinder eine Mischung aus Magnesiumoxid und Magnesiumsulfat und/oder Magnesiumchlorid ist.

3. Brandschutzmittel nach Anspruch 1 oder 2, dadurch gekennzeichnet, daß die Mischung eine Zusammensetzung von 50 - 95 Gew.-%, insbesondere 60 - 90 Gew.-%, vorzugsweise 70 - 90 Gew.-% wasserabspaltendes Hydroxid, insbesondere Aluminiumhydroxid, und 5 - 50 Gew.-%, insbesondere 10 - 40 Gew.-%, vorzugsweise 10 - 30 Gew.-% Magnesiabinder, davon vorzugsweise 2,5 - 25 Gew.-%, insbesondere 5 - 20 Gew.-%, vorzugsweise 5 - 15 Gew.-% Magnesiumoxid sowie 2,5 - 25 Gew.-%, insbesondere 5 - 20 Gew.-%, vorzugsweise 5 - 15 Gew.-% Magnesiumsulfat und/oder Magnesiumchlorid aufweist.

4. Brandschutzmittel nach Anspruch 3, dadurch gekennzeichnet, daß die Mischung eine bevorzugte Zusammensetzung von ca. 80 Gew.-% Aluminiumhydroxid, ca. 10 Gew.-% Magnesiumoxid und ca. 10 Gew.-% Magnesiumsulfat aufweist.

5. Verwendung des Brandschutzmittels nach einem der Ansprüche 1 bis 4, dadurch gekennzeichnet, daß das Brandschutzmittel als Füllung eines Hohlprofiles, insbesondere eines solchen aus Metall, dient.

6. Verwendung des Brandschutzmittels nach einem der Ansprüche 1 bis 4, dadurch gekennzeichnet, daß das Brandschutzmittel zur Verbindung, insbesondere zur brandschutztechnischen Verbindung von wenigstens zwei Körpern (2, 2a) aus gebundener Mineralwolle eingesetzt wird.

7. Brandschutzelement auf Mineralwollebasis, mit wenigstens zwei Körpern (2, 2a) aus gebundener Mineralwolle, welche durch eine Schicht (3) aus einem wasserabspaltenden Hydroxid und einem anorganischen Bindemittel verbunden sind,

   **dadurch gekennzeichnet, daß**
   das Bindemittel ein exotherm abbindender Magnesiabinder ist.

8. Brandschutzelement nach Anspruch 7, dadurch gekennzeichnet, daß der Magnesiabinder kaustisches Magnesiumoxid und Magnesiumsulfat und/oder Magnesiumchlorid ist.

9. Brandschutzelement nach Anspruch 7 oder 8, dadurch gekennzeichnet, daß das wasserabspaltende Hydroxid Aluminiumhydroxid ist.

10. Brandschutzelement nach einem der Ansprüche 7 bis 9, dadurch gekennzeichnet, daß die Schicht (3) 50 - 95 Gew.-%, insbesondere 60 - 90 Gew.-%, vorzugsweise 70 - 90 Gew.-% wasserabspaltendes Hydroxid, insbesondere Aluminiumhydroxid, und 5 - 50 Gew.-%, insbesondere 10 - 40 Gew.-%, vorzugsweise 10 - 30 Gew.-% Magnesiabinder, davon vorzugsweise 2,5 - 25 Gew.-%, insbesondere 5 - 20 Gew.-%, vorzugsweise 5 - 15 Gew.-% Magnesiumoxid sowie 2,5 - 25 Gew.-%, insbesondere 5 - 20 Gew.-%, vorzugsweise 5 - 15 Gew.-% Magnesiumsulfat und/oder Magnesiumchlorid, aufweist.

11. Brandschutzelement nach einem der Ansprüche 7 bis 10, dadurch gekennzeichnet, daß die Schicht (3) ca. 80 Gew.-% Aluminiumhydroxid, ca. 10 Gew.-% Magnesiumoxid und ca. 10 Gew.-% Magnesiumsulfat enthält.

12. Brandschutzelement nach einem der Ansprüche 7 bis 11, dadurch gekennzeichnet, daß die Körper (2, 2a) aus gebundener Mineralwolle plattenförmig sind.

13. Verwendung des Brandschutzelementes nach einem der Ansprüche 7 bis 12, dadurch gekennzeichnet, daß das Brandschutzelement als eine Einlage für eine Feuerschutztüre oder für einen feuerwiderstandsfähigen Schrank oder eine Kassette dient.

14. Brandschutzelement, dadurch gekennzeichnet, daß es ein Hohlprofil, insbesondere ein solches aus Metall, aufweist, welches in einem durch dessen Begrenzungswände definierten Hohlraum, eine den Hohlraum füllende Masse aus einem wasserabspaltenden Hydroxid, insbesondere Aluminiumhydroxid, und einem exotherm abbindenden Magnesiabinder, insbesondere eine Mischung aus Magnesiumoxid und Magnesiumsulfat und/oder Magnesiumchlorid aufweist.

15. Brandschutzelement nach Anspruch 14, dadurch gekennzeichnet, daß das Hohlprofil wenigstens Teil eines feuerwiderstandsfähigen Türrahmens oder von feuerwiderstandsfähigen Schränken oder Kassetten bildet.

16. Verfahren zur Herstellung eines Brandschutzelementes, insbesondere eines solchen nach einem der Ansprüche 7 bis 13, wobei in einem kontinuierlichen oder wenigstens halbkontinuierlichen Verfahren einem wasserabspaltenden Hydroxid, insbesondere Aluminiumhydroxid in fester Form oder in Form einer wäßrigen Aufschlämmung ein anorganisches Bindemittel oder eine wäßrige Aufschlämmung desselben derart zugemischt wird, daß sich eine Masse mit plastischer Konsistenz ergibt; und

die plastische Masse auf einen ersten Körper (2a) aus gebundener Mineralwolle als Schicht (3) aufgebracht wird; und
ein zweiter Körper (2) aus gebundener Mineralwolle auf der Schicht (3) angeordnet und angedrückt wird,
**dadurch gekennzeichnet, daß**
als anorganisches Bindemittel ein exotherm abbindender Magnesiabinder verwendet wird; und daß
ein exothermes Abbinden der zwischen beiden Körpern (2, 2a) befindlichen Schicht (3) induziert wird.

17. Verfahren nach Anspruch 16, dadurch gekennzeichnet, daß als Magnesiabinder Magnesiumoxid und Magnesiumsulfat und/oder Magnesiumchlorid verwendet wird.

18. Verfahren nach Anspruch 16 oder 17, dadurch gekennzeichnet, daß das Brandschutzelement zur Induktion des exothermen Abbindens für eine kurze Zeit im Bereich von unter 60 min, insbesondere 2 bis 4 min einer Anschuberwärmung ausgesetzt wird.

19. Verfahren nach einem der Ansprüche 16 bis 18, dadurch gekennzeichnet, daß die Schicht (3) mit einer Dicke von 1 bis 5 mm, insbesondere ca. 3 mm, aufgetragen wird.

**Claims**

1. A fireproofing agent consisting of a mixture of a dehydrating hydroxide and an exothermically setting magnesia binder.

2. A fireproofing agent according to claim 1, characterised in that the dehydrating hydroxide is aluminium hydroxide and the magnesia binder is a mixture of magnesium oxide and magnesium sulphate and/or magnesium chloride.

3. A fireproofing agent according to claim 1 or 2, characterised in that the mixture has a composition of 50 to 95% by weight, more particularly 60 to 90% by weight, preferably 70 to 90% by weight, of dehydrating hydroxide, more particularly aluminium hydroxide, and 5 to 50% by weight, more particularly 10 to 40% by weight, preferably 10 to 30% by weight, of magnesia binder, of which preferably 2.5 to 25% by weight, more particularly 5 to 20% by weight, preferably 5 to 15% by weight is magnesium oxide and 2.5 to 25% by weight, more particularly 5 to 20% by weight, preferably 5 to 15% by weight is magnesium sulphate and/or magnesium chloride.

4. A fireproofing agent according to claim 3, characterised in that the mixture has a preferred composition of about 80% by weight of aluminium hydroxide, about 10% by weight magnesium oxide and about 10% by weight magnesium sulphate.

5. Use of the fireproofing agent according to any one of claims 1 to 4, characterised in that the fireproofing agent is used as a filler for a hollow profile, more particularly a metal hollow profile.

6. Use of the fireproofing agent according to any one of claims 1 to 4, characterised in that the fireproofing agent is used for connecting, more particularly the fireproof connecting, of at least two bodies (2, 2a) consisting of bonded mineral wool.

7. A mineral wool based fireproofing element, comprising at least two bodies (2, 2a) of bonded mineral wool connected by a layer (3) of a dehydrating hydroxide and an inorganic binding agent,

characterised in that
the binding agent is an exothermically setting magnesia binder.

8. A fireproofing element according to claim 7, characterised in that the magnesia binder is caustic magnesium oxide and magnesium sulphate and/or magnesium chloride.

9. A fireproofing element according to claim 7 or 8, characterised in that the dehydrating hydroxide is aluminium hydroxide.

10. A fireproofing element according to any one of claims 7 to 9, characterised in that the layer (3) comprises 50 to 95% by weight, more particularly 60 to 90% by weight, preferably 70 to 90% by weight, of dehydrating hydroxide, more particularly aluminium hydroxide, and 5 to 50% by weight, more particularly 10 to 40% by weight, preferably 10 to 30% by weight, of magnesia binder, of which preferably 2.5 to 25% by weight, more particularly 5 to 20% by weight, preferably 5 to 15% by weight, is magnesium oxide and 2.5 to 25% by weight, more particularly 5 to 20% by weight, preferably 5 to 15% by weight, is magnesium sulphate and/or magnesium chloride.

11. A fireproofing element according to any one of claims 7 to 10, characterised in that the layer (3) contains about 80% by weight of aluminium hydroxide, about 10% by weight of magnesium oxide and about 10% by weight of magnesium sulphate.

12. A fireproofing element according to any one of claims 7 to 11, characterised in that the bodies (2, 2a) of bonded mineral wool are in panel form.

13. Use of the fireproofing element according to any one of claims 7 to 12, characterised in that the fireproofing element serves as an inlay for a fireproof door or for a fire-resistant cupboard or a bay.

14. A fireproofing element characterised in that it comprises a hollow profile, more particularly a metal hollow profile, which, in a cavity defined by its boundary walls, contains a substance which fills the cavity and consists of a dehydrating hydroxide, more particularly aluminium hydroxide, and an exothermically setting magnesia binder, more particularly a mixture of magnesium oxide and magnesium sulphate and/or magnesium chloride.

15. A fireproofing element according to claim 14, characterised in that the hollow profile forms at least part of a fire-resistant door frame or of fire resistant cupboards or bays.

16. A method of producing a fireproofing element, more particularly in accordance with any one of claims 7 to 13, wherein an inorganic binding agent or an aqueous suspension thereof is so mixed, in a continuous or at least semi-continuous process, with a dehydrating hydroxide, more particularly aluminium hydroxide, in solid form or in the form of an aqueous suspension, as to give a substance of plastic consistency; and

the plastic substance is applied as a layer (3) to a first body (2a) of bonded mineral wool; and a second body (2) of bonded mineral wool is placed on and pressed against the layer (3), characterised in that
the inorganic binding agent used is an exothermically setting magnesia binder; and in that exothermic setting of the layer (3) between the two bodies (2, 2a) is induced.

17. A method according to claim 16, characterised in that the magnesia binder used is magnesium oxide and magnesium sulphate and/or magnesium chloride.

18. A method according to claim 16 or 17, characterised in that the fireproofing element is subjected to an initial heating for a short time, in the range of less than 60 minutes, more particularly for 2 to 4 minutes, in order to induce the exothermic setting.

19. A method according to any one of claims 16 to 18, characterised in that the layer (3) is applied in a thickness of 1 to 5 mm, more particularly about 3 mm.

**Revendications**

1. Agent de protection contre le feu constitué d'un mélange contenant un hydroxyde libérant de l'eau et un liant à base de magnésie à prise exothermique.

**2.** Agent de protection contre le feu selon la revendication 1, caractérisé en ce que l'hydroxyde libérant de l'eau est de l'hydroxyde d'aluminium, et en ce que le liant à base de magnésie est un mélange d'oxyde de magnésium et de sulfate de magnésium et/ou de chlorure de magnésium.

**3.** Agent de protection contre le feu selon la revendication 1 ou 2, caractérisé en ce que le mélange est une composition de 50 à 95 % en poids, notamment de 60 à 90 % en poids, de préférence de 70 à 90 % en poids d'hydroxyde libérant de l'eau, notamment d'hydroxyde d'aluminium, et de 5 à 50 % en poids, notamment de 10 à 40 % en poids, de préférence de 10 à 30 % en poids de liant à base de magnésie, contenant de préférence 2,5 à 25 % en poids, notamment 5 à 20 % en poids, de préférence 5 à 15 % en poids d'oxyde de magnésium, ainsi que 2,5 à 25 % en poids, notamment 5 à 20 % en poids, de préférence 5 à 15 % en poids de sulfate de magnésium et/ou de chlorure de magnésium.

**4.** Agent de protection contre le feu selon la revendication 3, caractérisé en ce que le mélange présente une composition préférée d'environ 80 % en poids d'hydroxyde d'aluminium, d'environ 10 % en poids d'oxyde de magnésium et d'environ 10 % en poids de sulfate de magnésium.

**5.** Mise en oeuvre de l'agent de protection contre le feu selon l'une quelconque des revendications 1 à 4, caractérisée en ce que l'agent de protection contre le feu sert en tant que remplissage d'un profilé creux, ce dernier étant notamment un profilé en métal.

**6.** Mise en oeuvre de l'agent de protection contre le feu selon l'une quelconque des revendications 1 à 4, caractérisée en ce que l'agent de protection contre le feu est utilisé pour la liaison, notamment pour la liaison en matière de technique de protection contre l'incendie, d'au moins deux corps (2, 2a) en laine minérale fixée.

**7.** Elément de protection contre le feu à base de laine minérale comportant au moins deux corps (2, 2a) en laine minérale fixée, qui sont reliés par une couche (3) constituée d'un hydroxyde libérant de l'eau et d'un liant inorganique,

caractérisé en ce que le liant est un liant à base de magnésie à prise exothermique.

**8.** Elément de protection contre le feu selon la revendication 7, caractérisé en ce que le liant à base de magnésie est de l'oxyde de magnésium et du sulfate de magnésium et/ou du chlorure de magnésium caustiques.

**9.** Elément de protection contre le feu selon la revendication 7 ou 8, caractérisé en ce que l'hydroxyde libérant de l'eau est de l'hydroxyde d'aluminium.

**10.** Elément de protection contre le feu selon l'une quelconque des revendications 7 à 9, caractérisé en ce que la couche (3) contient 50 à 95 % en poids, notamment 60 à 90 % en poids, de préférence 70 à 90 % en poids d'hydroxyde libérant de l'eau, notamment de l'hydroxyde d'aluminium, et 5 à 50 % en poids, notamment 10 à 40 % en poids, de préférence 10 à 30 % en poids de liant à base de magnésie, dont 2,5 à 25 % en poids, notamment 5 à 20 % en poids, de préférence 5 à 15 % en poids, sont de l'oxyde de magnésium, ainsi que 2,5 à 25 % en poids, notamment 5 à 20 % en poids, de préférence 5 à 15 % en poids de sulfate de magnésium et/ou de chlorure de magnésium.

**11.** Elément de protection contre le feu selon l'une quelconque des revendications 7 à 10, caractérisé en ce que la couche (3) contient environ 80 % en poids d'hydroxyde d'aluminium, environ 10 % en poids d'oxyde de magnésium et environ 10 % en poids de sulfate de magnésium.

**12.** Elément de protection contre le feu selon l'une quelconque des revendications 7 à 11, caractérisé en ce que les corps (2, 2a) en laine minérale fixée ont la forme de plaques.

**13.** Mise en oeuvre de l'élément de protection contre le feu selon l'une quelconque des revendications 7 à 12, caractérisée en ce que l'élément de protection contre le feu sert de pièce d'insertion pour une porte coupe-feu ou pour une armoire ou un caisson résistant au feu.

**14.** Elément de protection contre le feu, caractérisé en ce qu'il comporte un profilé creux, ce dernier étant notamment en métal, qui, dans un espace creux défini par ses parois de délimitation, contient une masse remplissant l'espace creux en un hydroxyde libérant de l'eau, notamment en hydroxyde d'aluminium, et un liant à base de magnésie à prise exothermique, notamment un mélange d'oxyde de magnésium et de sulfate de magnésium et/ou de chlorure de magnésium.

**15.** Elément de protection contre le feu selon la revendication 14, caractérisé en ce que le profilé creux constitue au moins une partie d'un cadre de porte résistant au feu ou d'armoires ou de caissons résistant au feu.

**16.** Procédé destiné à la fabrication d'un élément de protection contre le feu, ce dernier étant notamment un élément selon l'une quelconque des revendications 7 à 13, selon lequel, au cours d'un procédé continu ou du moins senti-continu, il est mélangé un liant inorganique ou une suspension aqueuse de celui-ci à un hydroxyde libérant de l'eau, notamment de l'hydroxyde d'aluminium sous forme solide ou sous forme d'une suspension aqueuse, de telle sorte qu'il est obtenu une masse d'une consistance plastique ; et

la masse plastique étant appliquée en tant que couche (3) sur une premier corps (2a) en laine minérale fixée ; et
un second corps (2) en laine minérale fixée étant disposé et pressé sur la couche (3) ; caractérisé en ce qu'il est utilisé un liant à base de magnésie à prise exothermique en tant que liant inorganique ; et en ce
qu'une prise exothermique est induite dans la couche (3) située entre les deux corps (2, 2a).

17. Procédé selon la revendication 16, caractérisé en ce qu'il est utilisé de l'oxyde de magnésium et de sulfate de magnésium et/ou de chlorure de magnésium en tant que liant à base de magnésie.

18. Procédé selon la revendication 16 ou 17, caractérisé en ce que l'élément de protection contre le feu est exposé pour induction de la prise exothermique à une poussée de réchauffage pendant une courte durée se situant dans une plage inférieure à 60 minutes, notamment de 2 à 4 minutes.

19. Procédé selon l'une quelconque des revendications 16 à 18, caractérisé en ce que la couche (3) est appliquée avec une épaisseur de 1 à 5 mm, notamment de l'ordre 3 mm.